# EUROPÄISCHE PATENTSCHRIFT

(11) **EP 1 385 342 B1**
(45) Veröffentlichungstag und Bekanntmachung des Hinweises auf die Patenterteilung: **02.11.2006**
(21) Anmeldenummer: 02016500.7
(22) Anmeldetag: 23.07.2002
(51) Int. Cl.: H04Q 3/62, H04M 3/42

(54) **Kommunikationssystem und Server für Kommunikationssystem**
Communication system and server
Système de communication et serveur

(43) Veröffentlichungstag der Anmeldung: 28.01.2004
(73) Patentinhaber: SIEMENS AKTIENGESELLSCHAFT, 80333 München (DE)
(72) Erfinder: Neuhaus, Ralf, 44534 Lünen (DE); Uecker, Rainer, 45470 Muelhelm (DE)

(56) Entgegenhaltungen:
- WO-A-99/16176
- DE-A- 19 910 468
- FR-A- 2 792 480
- US-A- 6 052 461
- US-A1- 2002 075 879

## Beschreibung

Aus der Produktschrift "Sonderausgabe telcom report und Siemens Magazin COM: ISDN im Büro - HICOM", Siemens AG, Berlin und München, 1985, Seite 58 bis 75 ist eine Kommunikationsanlage für Informationsvermittlung bekannt, insbesondere Sprachinformationsvermittlung. Die Kommunikationsanlage ist in eine Zentraleinheit mit einer zentralen Steuerungseinheit zur Steuerung der Kommunikationsanlage und einem Koppelnetz zur Vermittlung von zu übertragenden Informationen sowie in eine mehrere Anschlußeinheiten aufweisende Peripherieeinheit untergliedert. Die Anschlußeinheiten dienen dabei einem Anschluß von Kommunikationsendgeräten oder eines Kommunikationsnetzes an die Kommunikationsanlage. Die Zentraleinheit umfaßt ist auf einer zentralen Baugruppe der Kommunikationsanlage angeordnet. Die Anschlußeinheiten sind jeweils auf einer separaten Peripherie-Baugruppe angeordnet, die mit der zentralen Baugruppe beispielsweise über Steckverbindungen verbindbar sind.

Aus WO 01/89231 ist bekannt, für spezielle betriebliche Aufgaben vorgesehene Server über ein lokales Rechnernetz (lokal area network) eine LAN-Baugruppe mit einer Kommunikationsanlage zu verbinden, wobei die LAN-Baugruppe Bestandteil der Kommunikationsanlage ist. Aufgrund möglicher Störungen auf Übertragungsstrecken zwischen der Kommunikationsanlage und dem jeweiligen Server ist eine Auslagerung von Daten auf einen leistungsfähigen Rechner mit verhältnismäßig großen Speicherressourcen kritisch. Dies gilt insbesondere im Hinblick auf Datenverluste oder Netzwerkstörungen, welche die Erreichbarkeit von Ressourcen des jeweiligen Servers beeinträchtigen. Zudem ist für eine Übertragung von Systemmeldungen der Kommunikationsanlage zur Verarbeitung und Rückübermittlung durch einen externen Server eine Anwendung von Protokoll-Tunnelungsmechanismen im Hinblick auf unterschiedliche verwendete Übertragungsprotokolle erforderlich. Die Anwendung von Protokoll-Tunnelungsmechanismen wirkt sich dabei nachteilig auf bei der Übertragung zwischen Kommunikationsanlage und Server erreichte Datenübertragungsraten aus, insbesondere Nutzdatenübertragungsraten. Ein weiterer nachteiliger Aspekt sind bei einer Protokollumsetzung nie auszuschließende Daten- und Informationsverluste, die somit das Risiko von Datenübertragungsfehlern erhöhen.

In US 6,052,461 ist ein Kommunikationssystem mit den Merkmalen entsprechend dem Oberbegriff des Anspruchs 1 beschrieben. Dagegen ist dort nicht offenbart, daß der Server zur Durchführung eines Systemsoftware-Updates für die Kommunikationsanlage ausgebildet ist. Statt dessen werden Status-Informationen bei Zustandsänderungen durch einen einer Nebenstellenanlage zugeordneten Server aktualisiert. Dies hat den Nachteil, daß Systemsoftware-Updates über zusätzliche Schnittstellen bereitgestellt werden müssen, was wiederum nachteilige Auswirkungen auf einen zuverlässigen und gegenüber unberechtigten Zugriffen sicheren Betrieb eines Kommunikationssystems hat.

Der vorliegenden Erfindung liegt daher die Aufgabe zugrunde, eine Lösung für eine zuverlässigere und leistungsfähigere Kopplung eines für spezielle betriebliche Aufgaben vorgesehenen Servers an eine Kommunikationsanlage zu schaffen.

Diese Aufgabe wird durch ein Kommunikationssystem mit den in Anspruch 1 angegebenen Merkmalen und einen Server für ein Kommunikationssystem mit den in Anspruch 8 angegebenen Merkmalen gelöst. Vorteilhafte Weiterbildungen des erfindungsgemäßen Kommunikationssystems sind in den abhängigen Ansprüchen angegeben.

Ein wesentlicher Aspekt der vorliegenden Erfindung besteht darin, daß durch eine Ankopplung eines Servers für ein Kommunikationssystem an eine Kommunikationsanlage über eine Anschlußeinheit der Kommunikationsanlage eine bisher für diese Zwecke erforderliche LAN-Baugruppe eingespart werden kann. Außerdem sind keine Protokoll-Tunnelungsmechanismen zur Übertragung von Systemmeldungen mehr erforderlich, um diese beispielsweise für eine Übertragung gemäß einem paketorientierten Übertragungsprotokoll umzuwandeln bzw. zurückzugewinnen. Hierdurch wird die Realisierung einer Server-Anbindung an die Kommunikationsanlage vereinfacht und zudem die Nutzdatentransferrate erhöht. Dies ermöglicht wiederum eine Auslagerung speicherintensiver Systemdaten und rechenintensiver Funktionen und Anwendungen von der Kommunikationsanlage auf den Server, zumal die Ausfallsicherheit im Vergleich zu einer Verwendung von LAN-Baugruppen zur Server-Anbindung deutlich erhöht ist.

Die vorliegende Erfindung wird nachfolgend an einem Ausführungsbeispiel anhand der Zeichnung näher erläutert. Es zeigt
- Figur 1: eine schematische Darstellung des Aufbaus eines Kommunikationssystems mit einer separaten Datennetzkopplungseinheit einer Kommunikationsanlage,
- Figur 2: eine schematische Darstellung des Aufbaus eines Kommunikationssystems mit einer Kommunikationsanlage und einem über eine Anschlußeinheit der Kommunikationsanlage mit dieser verbundenen Server.

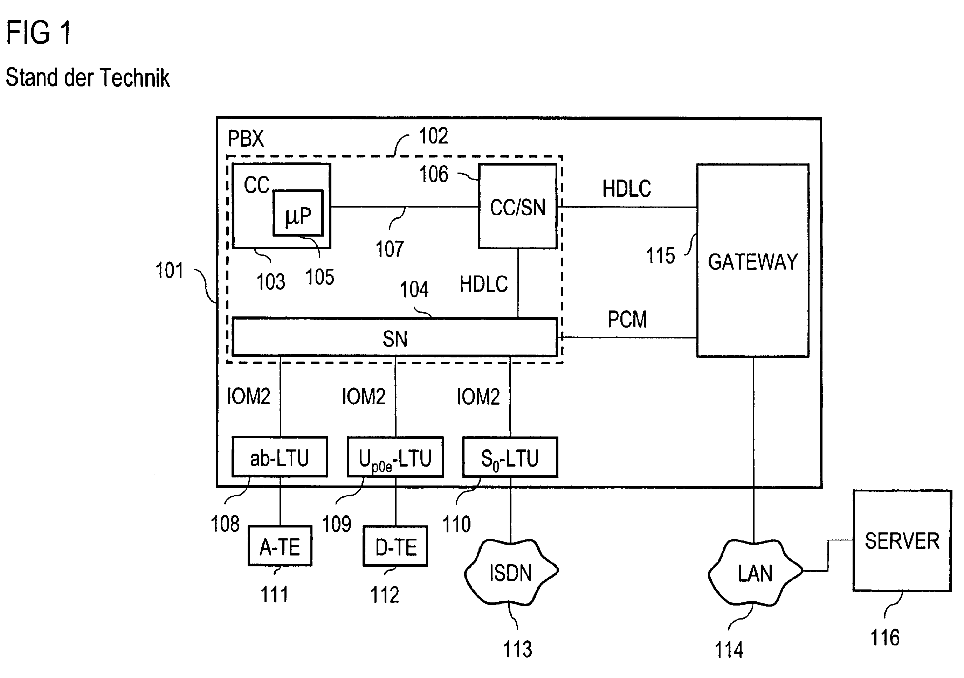

In Figur 1 ist der Aufbau eines Kommunikationssystems mit einer Kommunikationsanlage 101 (private branch exchange - PBX) und einem Server 116 schematisch dargestellt. Ein solches Kommunikationssystem ist beispielweise in WO 01/89231 beschrieben. Die Kommunikationsanlage 101 weist eine üblicherweise auf einer zentralen Baugruppe angeordnete Zentraleinheit 102 mit einer zentralen Steuerungseinrichtung 103 (common control -CC) und einem Koppelnetz 104 (switching network - SN) auf. Die zentrale Steuerungseinrichtung 103 umfaßt zur Steuerung von Funktionen der Kommunikationsanlage 101 einen Mikroprozessor 105. Durch das Koppelnetz 104 werden über die Kommunikationsanlage 101 zu verbindende Sprach- bzw. Datenübertragungskanäle durchgeschaltet. Die zentrale Steuerungseinrichtung 103 und das Koppelnetz 104 sind über eine Umwandlungseinheit 106 miteinander verbunden. Durch die Umwandlungseinheit 106 werden ein für einen Mikroprozessorbus 107 zwischen der zentralen Steuerungseinrichtung 103 und der Umwandlungseinheit 106 verwendetes Übertragungsprotokoll und ein vom Koppelnetz 104 unterstütztes HDLC-Protokoll (high level data link control) bidirektional in einander umgewandelt.

An das Koppelnetz 104 sind über Verbindungsleitungen Anschlußeinheiten 108, 109, 110 angeschlossen, die üblicherweise jeweils auf einer dezentralen Baugruppe angeordnet sind. Beispielsweise ist eine analoge Anschlußeinheit 108 mit einer ab-Schnittstelle zum Anschluß von analogen Kommunikationsendgeräten 111, eine digitale Anschlußeinheit 109 mit einer UpOe-Schnittstelle zum Anschluß von digitalen Kommunikationsendgeräten 112 und eine weitere digitale Anschlußeinheit 110 mit einer S0-Schnittstelle zum Anschluß eines ISDN-Kommunikationsnetzes 113 an die Kommunikationsanlage 101 vorgesehen. Sprach- bzw. Dateninformationen werden entsprechend dem IOM2-Übertragungsprotokoll (ISDN oriented modular extended) zwischen den Anschlußeinheiten 108, 109, 110 und dem Koppelnetz 104 übertragen. Einzelheiten zum IOM2-Übertragungsprotokoll sind der Produktschrift "ICs for Communications - IOM2 Interface Reference Guide", Siemens AG, München 3/91, Bestell-Nr. B115-H6397-X-X-7600, Seite 6 bis 12 zu entnehmen. Anstelle des IOM2-Übertragungsprotokoll kann zur bidirektionalen Datenübertragung zwischen dem Koppelnetz 104 und den Anschlußeinheiten 108, 109, 110 auch das PCM-Übertragungsprotokoll (pulse code modulation) verwendet werden.

Für eine Verbindung der Kommunikationsanlage 101 mit einem Datennetz, beispielsweise einem lokalen Rechnernetz 114 (local area network -LAN), weist die Kommunikationsanlage 101 eine separate Datennetzkopplungseinheit 115 auf. Die Datennetzkopplungseinheit 115 weist eine Mehrzahl von in Figur 1 nicht explizit dargestellten gleichen Kontaktvorrichtungen zum Anschluß von Controllereinheiten auf. Derartige Controllereinheiten verfügen über eine HDLC- und eine PCM-Schnittstelle zur Zentraleinheit 102 und über eine standardisierte MII-Schnittstelle (medium independent interface) zu einer LAN-Anschlußeinheit der Kommunikationsanlage 101. Eine Verbindung zwischen dem lokalen Rechnernetz 114 und der LAN-Anschlußeinheit kann beispielsweise mittels einer 10Base-T- oder einer 100Base-T-Schnittstelle realisiert werden.

Eine Controllereinheit der Datennetzkopplungseinheit 115 dient üblicherweise einer protokollgemäßen Vorverarbeitung von Steuerdaten, die über das lokale Rechnernetz 114 empfangen wurden, und deren Weiterleitung an die Zentraleinheit 102. Die Zentraleinheit 102 steuert dann die Ausführung der durch die Steuerdaten identifizierten Funktionen. Dies schließt auch von der Datennetzkopplungseinheit 115 auszuführende Funktionen ein. Die Funktionen, wie Kopplung von unterschiedlichen Rechnernetzen, externer Zugriff auf Netzressourcen im Rahmen von "Teleworking", CTI-Anwendungen oder "Voice over IP"-Anwendungen werden durch der Datennetzkopplungseinheit 115 zugeordnete funktionsspezifische digitale Signalprozessoren ausgeführt, die durch die zentrale Steuerungseinheit 103 angesteuert werden.

An das lokale Rechnernetz 114 können beispielsweise für spezielle Aufgaben vorgesehene Server 116 angeschlossen werden, die für die Kommunikationsanlage 101 auf gängigen Personal Computern nicht aber in der zentralen Steuerungseinheit 103 lauffähige Programme verfügbar machen, die damit nicht auf die Kommunikationsanlage 101 portiert werden müssen. Zudem wird die zentrale Steuerungseinheit 103 durch eine Auslagerung einer entsprechenden Programmablaufsteuerung entlastet, so daß Prozeßrechenressourcen der zentralen Steuerungseinheit 103 primär für vermittlungstechnische Steuerungsaufgaben reserviert werden können.

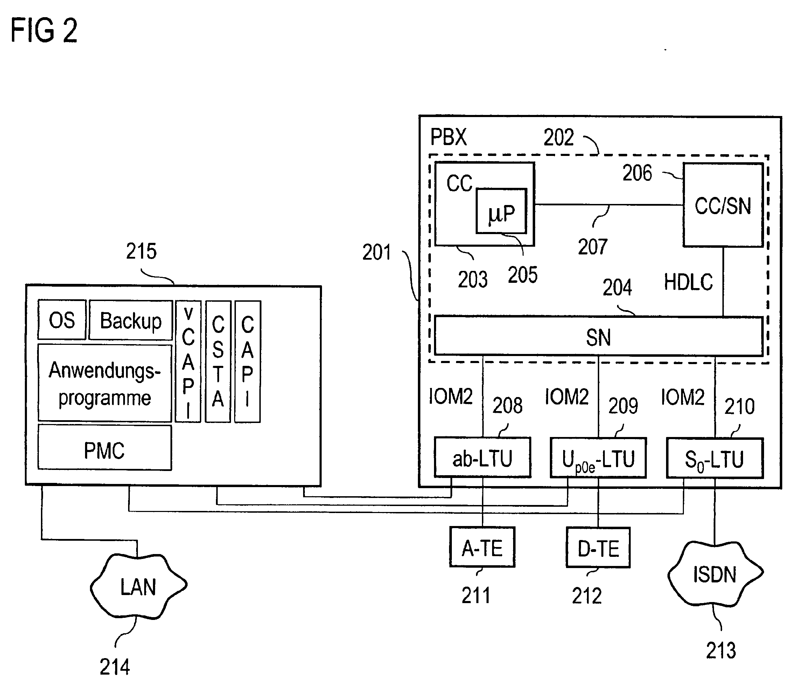

In Figur 2 ist der Aufbau eines Kommunikationssystems mit einer Kommunikationsanlage 201 und einem Server 215 schematisch dargestellt, der über eine Anschlußeinheit 208, 209, 210 der Kommunikationsanlage 201 mit dieser verbunden ist. Die in Figur 2 dargestellte Kommunikationsanlage 201 entspricht hinsichtlich der Einbindung und Funktionalität von Zentraleinheit 202, Anschlußeinheiten 208, 209, 210, Kommunikationsendgeräten 211, 212 und weiteren Kommunikationsnetzen 213 der Kommunikationsanlage 101. So gliedert sich die Zentraleinheit 202 in eine zentrale Steuerungseinheit 203 mit einem Mikroprozessor 205, in ein Koppelnetz 204 und in eine Umwandlungseinheit 206, welche über einen Mikroprozessorbus 207 mit der zentralen Steuerungseinheit verbunden ist.

Über eine oder mehrere der Anschlußeinheiten 208, 209, 210 ist ein Server 215 mit der Kommunikationsanlage 201 verbunden. Der Server 215 weist zumindest eine in Figur 2 nicht explizit dargestellte zentrale Recheneinheit zur Ausführung von Anwendungsprogrammen, eine Ein-/Ausgabeeinheit und eine Schnittstelle zum Anschluß an eine Anschlußeinheit 208, 209, 210 der Kommunikationsanlage 201 auf. Auf dem Server 215 ist vorzugsweise ein weitverbreitetes Betriebssystem, wie MS-Windows, Unix oder Linux, installiert, so daß die Ablauffähigkeit einer Vielzahl von gängigen Anwendungsprogrammen gewährleistet ist. Die Schnittstelle des Servers zu einer der Anschlußeinheiten 208, 209, 210 kann beispielsweise hardwareseitig eine S0-Schnittstelle und softwareseitig eine CAPI-Programmierschnittstelle (common application programming interface) umfassen. Eine Alternative dazu ist eine Verwendung einer Uₚ₀-Schnittstelle auf Hardwareebene und einer auf dem CSTA-Standard (computer supported telecommunications application) basierende Programmierschnittstelle auf Softwareebene. Als weitere Alternative können eine ab-Schnittstelle auf Hardwareebene und eine vCAPI-Programmierschnittstelle (common application programming interface) auf Softwareebene verwendet werden. Zur Erhöhung der Ausfallsicherheit können auch zwei oder mehrere Schnittstellen parallel verwendet werden.

Des weiteren verfügt der Server 215 über eine Schnittstelle für ein Datennetz mit paketorientierter Vermittlung, beispielsweise ein lokales Rechnernetz 214. Dabei wird die Schnittstelle des Servers 215 für die Kommunikationsanlage 201 verfügbar gemacht, so daß eine zusätzliche, in Figur 1 dargestellte Datennetzkopplungseinheit 115 nicht mehr erforderlich ist. Dadurch ist es möglich Sprachinformationen zur Verarbeitung an den Server 215 weiterzuleiten und durch diesen für eine Verwendung im lokalen Rechnernetz 214 aufbereiten zu lassen. Mögliche Anwendungsgebiete sind beispielsweise Routing, Fernzugriffsdienst (remote access service - RAS), Verschlüsselung, Bereitstellung von CAPI-Schnittstellen (common application programming interface), Dateitransfer, Protokollkonvertierung entsprechend dem H.323-Standard ("Voice o-ver IP") oder Sprachcodierung/-kompression. Weitere Anwendungsgebiete sind eine Bereitstellung CSTA-Anwendungen (computer supported telecommunications application) über TAPI-Programmierschnittstellen (telephony application programming nterface) sowie eine Bereitstellung von TAPI-Treibern. Neben Kostenvorteilen durch eine derartige Ressourcenteilung ergeben sich insbesondere gegenüber externen Serverlösungen erhebliche Leistungsverbesserungen, die u.a. durch eine entfallende "Protokoll-Tunnellung" bedingt sind. Außerdem sind keine Verschlüsselungsmaßnahmen bei einer Datenübermittlung zwischen Server 215 und Kommunikationsanlage 201 erforderlich.

Darüber hinaus ist auf in einer Speichereinheit des Servers 215 ein in diesem ablauffähiges Datenbanksicherungsprogramm installiert, das für die Kommunikationsanlage 201 zur Sicherung von Daten zum Betrieb der Kommunikationsanlage 201 bzw. zur Ausführung von Leistungsmerkmalen verfügbar gemacht wird. Dies bietet den Vorteil der Nutzbarmachung in der Datenverarbeitung etablierter und erprobter Datensicherungsmechanismen ohne Zwischenschaltung zusätzlicher Server bzw. ohne Portierung der jeweiligen Datensicherungsprogramme auf Kommunikationsanlagenbetriebssysteme.

Vorzugsweise verfügt der Server 215 über PMC-Modul-Schnittstellen, die ebenfalls für die Kommunikationsanlage 201 verfügbar gemacht werden. Derartige PMC-Modul-Schnittstellen sind vorzugsweise für gängige, PC-übliche Peripheriekarten geeignet und beispielsweise für Anwendungen wie ATM (asynchronous transfer mode), xDSL (digital subscriber line), Signalcodierung/-kompression, Verschlüsselung oder "Voice-Mail" vorgesehen.

Darüber hinaus ist der Server 215 vorzugsweise zur Durchführung von Systemdatenbank-/Systemsoftware-Updates für die Kommunikationsanlage durch entsprechende Steuerungsprogramme eingerichtet. Dies bietet den Vorteil, daß entsprechende Steuerungsprogramme nicht speziell auf das Betriebssystem der Kommunikationsanlage 201 portiert werden müssen. Außerdem bleiben Prozeßrechenressourcen der zentralen Steuerungseinheit 203 auf diese Weise für vermittlungstechnische Steuerungsaufgaben reserviert.

Die Anwendung der vorliegenden Erfindung ist nicht auf das beschriebene Ausführungsbeispiel beschränkt.

## Patentansprüche

1. Kommunikationssystem mit
- einer Kommunikationsanlage (201), die
- eine Steuerungseinheit (203) zur Steuerung von Funktionen der Kommunikationsanlage (201),
- ein durch die Steuerungseinheit (203) gesteuertes Koppelnetz (204) zur Vermittlung von Sprach- und/oder Dateninformationen und
- mindestens eine mit dem Koppelnetz (204) verbundene Anschlußeinheit (208-210) zum Anschluß von Endgeräten (211-212), Kommunikations- (213) und/oder Rechnernetzen (214) umfaßt,
- einem an eine Anschlußeinheit (208-210) der Kommunikationsanlage (201) angeschlossenen Server (215) mit zumindest einer Recheneinheit, einem Arbeitsspeicher, einer Ein-/Ausgabeeinheit und einer Schnittstelle zum Anschluß an eine Anschlußeinheit (208-210) einer Kommunikationsanlage (201),
**dadurch gekennzeichnet, daß** der Server (215) zur Durchführung eines Systemsoftware-Updates für die Kommunikationsanlage (201) ausgebildet ist.

2. Kommunikationssystem nach Anspruch 1,
bei dem der Server (215) über eine S₀-Schnittstelle und eine CAPI-Programmierschnittstelle mit der Anschlußeinheit (208-210) verbunden ist.

3. Kommunikationssystem nach einem der Ansprüche 1 oder 2,
bei dem der Server (215) über eine Uₚ₀-Schnittstelle und eine auf dem CSTA-Standard basierende Programmierschnittstelle mit der Anschlußeinheit (208-210) verbunden ist.

4. Kommunikationssystem nach einem der Ansprüche 1 bis 3,
bei dem der Server (215) über eine ab-Schnittstelle und eine vCAPI-Programmierschnittstelle mit der Anschlußeinheit (208-210) verbunden ist.

5. Kommunikationssystem nach einem der Ansprüche 1 bis 4,
bei dem der Server (215) zumindest eine für die Kommunikationsanlage (201) verfügbar gemachte PMC-Modul-Schnittstelle aufweist.

6. Kommunikationssystem nach einem der Ansprüche 1 bis 5,
bei dem der Server (215) eine für die Kommunikationsanlage (201) verfügbar gemachte Schnittstelle zu einem Datennetz (214) mit paketorientierter Vermittlung aufweist.

7. Kommunikationssystem nach einem der Ansprüche 1 bis 6,
bei dem auf einem dem Server (215) zugeordneten Speichermedium ein für die Kommunikationsanlage (201) verfügbar gemachtes Datenbanksicherungsprogramm zur Sicherung von Daten zum Betrieb der Kommunikationsanlage (201) und/oder zur Ausführung von Leistungsmerkmalen installiert ist, das durch den Server (215) ausführbar ist.

8. Server (215) für ein Kommunikationssystem gemäß Anspruch 1 mit
- zumindest einer Recheneinheit,
- einem Arbeitsspeicher,
- einer Ein-/Ausgabeeinheit und
- einer Schnittstelle zum Anschluß an eine Anschlußeinheit einer Kommunikationsanlage,
**dadurch gekennzeichnet, daß** der Server (215) zur Durchführung eines Systemsoftware-Updates für die Kommunikationsanlage (201) ausgebildet ist.

## Claims

1. Communications system with
- a PBX system (201), comprising
- a control unit (203) to control functions of the PBX system (201),
- a switching network (204) controlled by the control unit (203) to switch voice and/or data information, and
- at least one connection unit (208-210) connected to the switching network (204) for the connection of terminals (211-212), communications networks (213) and/or computer networks (214),
- a server (215) connected to a connection unit (208-210) of the PBX system (201) with at least one computing unit, a working memory, an input/output unit and an interface for connection to a connection unit (208-210) of a PBX system (201),
**characterized in that** the server (215) is designed to carry out a system software update for the PBX system (201).

2. Communications system according to Claim 1,
in which the server (215) is connected via an So interface and a CAPI programming interface to the connection unit (208-210).

3. Communications system according to one of Claims 1 or 2,
in which the server (215) is connected via a Uₚ₀ interface and a programming interface based on the CSTA standard to the connection unit (208-210).

4. Communications system according to one of Claims 1 to 3,
in which the server (215) is connected via an ab-interface and a vCAPI programming interface to the connection unit (208-210).

5. Communications system according to one of Claims 1 to 4,
in which the server (215) has at least one PMC module interface which is made available for the PBX system (201).

6. Communications system according to one of Claims 1 to 5,
in which the server (215) has an interface to a data network (214) with packet-oriented switching, said interface being made available for the PBX system (201).

7. Communications system according to one of Claims 1 to 6,
in which a data backup program which is made available for the PBX system (201) and which can be run by the server (215) is installed on a storage medium allocated to the server (215) in order to back up data for the operation of the PBX system (201) and/or in order to perform service features.

8. Server (215) for a communications system according to Claim 1, with
- at least one computing unit,
- a working memory,
- an input/output unit, and
- an interface for connection to a connection unit of a PBX system,
**characterized in that** the server (215) is designed to carry out a system software update for the PBX system (201).

## Revendications

1. Système de communication comportant
- une installation de communication (201) qui comprend :
- une unité de commande (203) pour la commande de fonctions de l'installation de communication (201),
- un réseau de connexion (204) commandé par l'unité de commande (203) pour la commutation d'informations vocales et/ou de données, et
- au moins une unité de raccordement (208 à 210) reliée au réseau de connexion (204) pour le raccordement de terminaux (211 à 212), de réseaux de communication (213) et/ou de réseaux informatiques (214),
- un serveur (215) qui est raccordé à une unité de raccordement (208 à 210) de l'installation de communication (201) et qui comprend au moins une unité de calcul, une mémoire de travail, une unité d'entrée / sortie et une interface pour le raccordement à une unité de raccordement (208 à 210) d'une installation de communication (201),
**caractérisé par le fait que** le serveur (215) est conçu pour la mise en oeuvre d'une mise à jour de logiciels de système pour l'installation de communication (201).

2. Système de communication selon la revendication 1,
dans lequel le serveur (215) est relié par l'intermédiaire d'une interface S₀ et d'une interface de programmation CAPI à l'unité de raccordement (208 à 210).

3. Système de communication selon l'une des revendications 1 ou 2,
dans lequel le serveur (215) est relié par l'intermédiaire d'une interface Uₚ₀ et d'une interface de programmation basée sur le standard CSTA à l'unité de raccordement (208 à 210).

4. Système de communication selon l'une des revendications 1 à 3,
dans lequel le serveur (215) est relié par l'intermédiaire d'une interface ab et d'une interface de programmation vCAPI à l'unité de raccordement (208 à 210).

5. Système de communication selon l'une des revendications 1 à 4,
dans lequel le serveur (215) comporte au moins une interface de module-PMC mise à la disposition de l'installation de communication (201).

6. Système de communication selon l'une des revendications 1 à 5,
dans lequel le serveur (215) comporte une interface mise à la disposition de l'installation de communication (201) vers un réseau de données (214) avec commutation orientée paquets.

7. Système de communication selon l'une des revendications 1 à 6,
dans lequel un programme de sauvegarde de base de données qui est mis à la disposition de l'installation de communication (201), qui est destiné à la sauvegarde de données pour l'exploitation de l'installation de communication (201) et/ou pour la réalisation de services et qui est exécutable par le serveur (215) est installé sur un support de mémoire associé au serveur (215).

8. Serveur (215) pour un système de communication selon la revendication 1 comportant
- au moins une unité de calcul,
- une mémoire de travail,
- une unité d'entrée / sortie et
- une interface pour le raccordement à une unité de raccordement d'une installation de communication,
**caractérisé par le fait que** le serveur (215) est conçu pour la mise en oeuvre d'une mise à jour de logiciels de système pour l'installation de communication (201).
